Europäisches Patentamt

European Patent Office

Office européen des brevets

(11) Veröffentlichungsnummer : **0 151 472**
**B1**

# EUROPÄISCHE PATENTSCHRIFT

(45) Veröffentlichungstag der Patentschrift :
**30.11.88**

(51) Int. Cl.⁴ : **C 04 B 35/64**

(21) Anmeldenummer : **85101031.4**

(22) Anmeldetag : **01.02.85**

(54) **Verbessertes Verfahren zum Verdichten poröser keramischer Bauteile für das heissisostatische Pressen.**

(30) Priorität : **04.02.84 DE 3403917**

(43) Veröffentlichungstag der Anmeldung :
**14.08.85 Patentblatt 85/33**

(45) Bekanntmachung des Hinweises auf die Patenterteilung : **30.11.88 Patentblatt 88/48**

(84) Benannte Vertragsstaaten :
**AT BE CH DE FR GB IT LI NL SE**

(56) Entgegenhaltungen :
**EP-A- 0 035 784**
**DE-B- 2 812 986**
**GB-A- 2 010 913**
**GB-A- 2 062 011**
**US-A- 4 356 136**

(73) Patentinhaber : **Deutsche Forschungs- und Versuchsanstalt für Luft- und Raumfahrt e.V.**
**Linder Höhe Postfach 90 60 58**
**D-5000 Köln 90 (DE)**

(72) Erfinder : **Heinrich, Jürgen, Dr.**
**Rudolf-Hahn-Strasse 81**
**D-5300 Bonn (DE)**
Erfinder : **Böhmer, Manfred, Dr.**
**Birker Strasse 5a**
**D-5204 Lohmar 1 (DE)**

(74) Vertreter : **von Kreisler, Alek, Dipl.-Chem. et al**
**Deichmannhaus am Hauptbahnhof**
**D-5000 Köln 1 (DE)**

EP 0 151 472 B1

## Beschreibung

Die Erfindung betrifft ein Verfahren zum Verdichten kompliziert geformter und poröser keramischer Bauteile beliebiger Größe durch Kapseln mit arteigenen sinterfähigen Schichten und anschließendes heißisostatisches Pressen.

Formkörper aus keramischen, nicht-oxidischen Werkstoffen, wie z. B. aus Siliciumnitrid, Siliciumcarbid, Bornitrid oder Borcarbid, finden eine immer breitere Anwendung. Derartige Formkörper oder Bauteile aus keramischen Werkstoffen sind meist porös und erfordern daher eine Behandlung, um die Porosität zu verringern.

Als Verfahren zur Verringerung der Porosität ist z. B. das heißisostatische Pressen zu nennen. Da beim heißisostatischen Pressen Gas als Medium zur Druckübertragung verwendet wird, müssen poröse keramische Körper vor ihrer Verdichtung durch heißisostatisches Pressen mit einer gasdichten Kapsel umgeben werden.

Wegen der hohen Verdichtungstemperaturen von Siliciumnitrid, Siliciumcarbid, Bornitrid und Borcarbid werden heute fast ausschließlich Gläser mit hohen Erweichungstemperaturen, wie z. B. reines Quarzglas, Vycor$^R$- oder Duran$^R$-Glas als Kapselwerkstoff verwendet.

Die Verwendung von Glas als Kapselmaterial hat aber einige entscheidende Nachteile. Bei den hohen Verdichtungstemperaturen von über 1600 °C kommt es zu Reaktionen zwischen der Glashülle und den keramischen Formkörpern. Außerdem haben die genannten Gläser durchweg sehr viel kleinere Ausdehnungskoeffizienten als die keramischen Formkörper. Dies hat zur Folge, daß beim Abkühlen sehr hohe Spannungen auftreten, die zur völligen Zerstörung der Bauteile führen können. Schließlich bereitet es große Schwierigkeiten, die Kapselhülle aus Glas nach dem heißisostatischen Pressen wieder von den Bauteilen zu entfernen.

In der DE-OS 30 47 237 ist ein Verfahren beschrieben, das diese Nachteile umgeht. Dort werden kompliziert geformte poröse Körper aus Keramikmaterial, z. B. Turbinenschaufeln, mit einem inerten Preßpulver, z. B. Bornitrid-Pulver, umhüllt und danach zum heißisostatischen Verdichten in Quarzglas-Kapseln eingeschmolzen. Das Bornitrid-Pulver verhindert Reaktionen zwischen Kapselmaterial und Bauteil, so daß keine Spannungen beim Abkühlen auftreten und die Kapsel nach dem heißisostatischen Verdichten leicht entfernt werden kann. Dieses Verfahren ist für die Herstellung von Turbinenschaufeln gut geeignet.

Will man aber größere Bauteile, wie z. B. Turbolader-Rotoren oder monolithische Turbinenräder, verdichten, müssen die Glaskapseln umfangreicher sein. Sie werden jedoch dann so teuer, daß eine wirtschaftliche Herstellung der Bauteile nicht mehr möglich ist.

In der DE-OS 28 12 986 wird ein Verfahren beschrieben, bei dem als Ausgangsmaterial ein Bauteil aus Siliciumnitrid verwendet wird, das ein Verdichtungshilfsmittel enthält. Dieser poröse Gegenstand wird mit einer Siliciumnitrid-Haut von 25 bis 250 µm Dicke überzogen. Bei einem anschließenden Aufheiz-Vorgang soll ein Anteil des Verdichtungshilfsmittels aus dem Formkörper in die Siliciumnitrid-Haut diffundieren. Dadurch soll ermöglicht werden, daß die Siliciumnitrid-Schicht durch weitere Temperaturbehandlung verdichtet und einer Hochdruckatmosphäre ohne Rißbildung ausgesetzt werden kann.

Dieses Verfahren weist mehrere entscheidende Nachteile auf. Aus der Literatur (z. B. G. Wötting, Dissertation, TU Berlin 1983, Seite 9 ; Sallmang, Scholze, Die physikalischen und chemischen Grundlagen der Keramik, Springer-Verlag, Berlin, 1968) ist bekannt, daß die Diffusionsgeschwindigkeiten in Siliciumnitrid, aber auch in Siliciumcarbid, Bornitrid und Borcarbid, aufgrund des hohen Anteils an kovalenter Bindung extrem niedrig sind. Dies hat zur Folge, daß die Diffusion eines genügend hohen Anteils an Verdichtungshilfsmittel, der notwendig ist, damit die Außenhaut dichtsintern kann, aus dem Innern des Bauteils in die Außenschicht mehrere hundert Stunden in Anspruch nehmen würde. Ein weiterer Nachteil ist die Tatsache, daß der zu verdichtende Gegenstand selbst einen hohen Anteil an Verdichtungshilfsmittel enthalten muß. Diese Verdichtungshilfsmittel aber haben zur Folge, daß die Hochtemperatur-Eigenschaften dieser Werkstoffe negativ beeinflußt werden. Die Hochtemperatur-Eigenschaften von Siliciumnitrid, Siliciumcarbid, Bornitrid und Borcarbid, die kein Verdichtungshilfsmittel enthalten, sind es aber, die diese Werkstoffe für Präzisions-Bauteile so interessant machen.

Ein weiterer Nachteil ist darin zu sehen, daß die aufgetragene Siliciumnitrid-Haut ein integraler Bestandteil des fertigen Teils wird. Bei der Herstellung von Präzisions-Bauteilen sind jedoch in dem offenbarten Verfahren die notwendigen Anforderungen an Homogenität des Siliciummetall-Schlickers und an die Genauigkeit des Aufgießvorganges, der Einhaltung der Bedingungen des Nitridierschrittes und der Diffusion des Verdichtungshilfsmittels nur schwer zu erfüllen. Es werden daher Bauteile mit unterschiedlichen Abmessungen erhalten.

Aufgabe der vorliegenden Erfindung ist es deshalb, ein Verfahren zur Kapselung kompliziert geformter und poröser keramischer Formkörper beliebiger Größe zur Verfügung zu stellen, bei dem die Formkörper keine Verdichtungshilfsmittel enthalten müssen, die Ausdehnungskoeffizienten des Bauteils und der Kapsel aufeinander abgestimmt sind und keine Reaktionen zwischen dem Material der Kapsel und dem Bauteil auftreten können. Zur Lösung dieser Aufgabe wird erfindungsgemäß ein Verfahren vorgeschlagen, in dem poröse keramische Bauteile mit arteigenen sinterfähigen Schichten gekapselt und anschließend heißisostatisch gepresst werden, und das

dadurch gekennzeichnet ist, daß man die vorgeformten porösen keramischen Körper in eine Suspension eines arteigenen, kein Sinterhilfsmittel enthaltenden Materials in einem Lösungsmittel taucht und eine erste Kapselschicht bildet, das Lösungsmittel anschließend verdampft, die so erhaltenen Körper in eine zweite Suspension eines arteigenen sinterfähigen, ein oder mehrere Sinterhilfsmittel enthaltenden Materials in einem Lösungsmittel taucht und eine zweite Kapselschicht bildet, das Lösungsmittel anschließend verdampft, die so erhaltenen Körper bei erhöhter Temperatur in einer Schutzgas-Atmosphäre während einer ausreichenden Zeit sintert, die Körper mit dicht gesinterter Schicht nach an sich bekannten Verfahren heißisostatisch verdichtet und die beiden Kapselschichten mechanisch entfernt.

Die nach dem erfindungsgemäßen Verfahren gekapselten und anschließend heißisostatisch gepressten, vorher porösen Formkörper bestehen in erster Linie aus nichtoxidischen keramischen Werkstoffen, z. B. aus Siliciumnitrid, Siliciumcarbid, Bornitrid oder Borcarbid. Bevorzugter Werkstoff des Formkörpers ist Siliciumnitrid $Si_3N_4$.

Für das erfindungsgemäße Verfahren ist die Herstellungsweise der porösen Formkörper völlig unerheblich. Es können im Spritzgußverfahren, Schlickergußverfahren oder nach anderen Verfahren hergestellte oder reaktionsgesinterte Formkörper aus Werkstoffen der genannten Art für das Verfahren verwendet werden. Die Werkstoffe enthalten bevorzugt kein oder bis zu 4 Gew.-% an Verdichtungshilfsmittel.

Zur Ausbildung einer ersten Kapselschicht werden die porösen Formkörper in Suspensionen eines arteigenen, kein Sinterhilfsmittel enthaltenden Materials in einem Lösungsmittel eingetaucht. Unter arteigenen Materialien werden solche Materialien verstanden, die keine chemische Reaktion mit dem Werkstoff des Bauteils eingehen, zu keiner mechanischen Verzahnung zwischen Bauteil und erster Kapselschicht Anlaß gehen und im wesentlichen gleiche Ausdehnungskoeffizienten wie das Material des Bauteils aufweisen.

Bevorzugt wird für die Ausbildung der ersten Kapselschicht das gleiche Material verwendet, aus dem auch das poröse keramische Bauteil besteht. So werden beispielsweise Siliciumnitrid-Bauteile bevorzugt mit einer ersten Kapselschicht aus Siliciumnitrid, Siliciumcarbid-Bauteile mit einer ersten Kapselschicht aus Siliciumcarbid usw. versehen.

Die Suspensionen, in die die porösen keramischen Bauteile eingetaucht werden, werden durch Suspendieren des jeweiligen in pulverförmiger Form vorliegenden Materials der ersten Kapselschicht in einem geeigneten Lösungsmittel hergestellt. Diese Suspensionen enthalten Pulver und Lösungsmittel in einer Zusammensetzung von 30 : 70 bis 70 : 30 Gewichts-%, bevorzugt in einer Zusammensetzung von 50 : 50 Gewichts-%.

Als Lösungsmittel sind prinzipiell alle Lösungsmittel geeignet, die aufgrund eines relativ hohen Dampfdruckes leicht durch Trocknung entfernt werden können. Bevorzugte Lösungsmittel für diese Zwecke sind organische Lösungsmittel, wie z. B. Isopropanol.

Durch den Saugeffekt des porösen Formkörpers bildet sich nach Eintauchen in die Pulver-Suspension auf der Körper-Oberfläche eine Pulverschicht des arteigenen Materials von etwa 1 mm Stärke. Durch Trocknen wird das Lösungsmittel anschließend entfernt. Dies kann durch Trocknen in einem Trockenschrank, beispielsweise bei 110 °C geschehen ; es sind jedoch auch andere Trocknungsarten anwendbar, wie Trocknen im Warmluftstrom oder durch ausreichend langes Stehenlassen des mit einer ersten Kapselschicht überzogenen Formkörpers an der Luft bei Raumtemperatur.

In einer bevorzugten Ausführungsform der Erfindung werden zusätzlich Pulver eines arteigenen Materials auf die noch Lösungsmittel enthaltende erste Kapselschicht aufgestäubt, die ebenfalls kein Sinterhilfsmittel enthalten und sich von den Pulvern, die in dem verwendeten Lösungsmittel suspendiert wurden, nur durch ihre Korngröße unterscheiden. Die aufgestäubten Pulverbestandteile bleiben auf der noch feuchten ersten Kapselschicht haften, absorbieren Lösungsmittel und tragen durch die Erhöhung der Oberfläche zu einer schnelleren Verdunstung des Lösungsmittels schon bei niedrigen Temperaturen bei.

In einem nächsten Verfahrensschritt werden die so erhaltenen, mit einer ersten Kapselschicht überzogenen Formkörper in eine zweite Suspension eines arteigenen sinterfähigen, ein oder mehrere Sinterhilfsmittel enthaltenden Materials in einem Lösungsmittel getaucht, wobei sich eine zweite Kapselschicht ausbildet. Unter arteigenen Materialien im Sinne der vorliegenden Erfindung werden — wie auch bei der ersten Kapselschicht - keramische nicht-oxidische Werkstoffe verstanden, die keine chemischen Reaktionen mit dem Material des Formkörpers eingehen, keine mechanische Verzahnung der verschiedenen Schichten herbeiführen und keine unterschiedlichen Ausdehnungskoeffizienten hinsichtlich des Materials des Formkörpers aufweisen. Beispiele für derartige Materialien sind Siliciumnitrid, Siliciumcarbid, Bornitrid und Borcarbid.

Bevorzugt wird als Material für die zweite Kapselschicht dasselbe Material verwendet, aus dem auch der Formkörper und die erste Kapselschicht bestehen. Besonders bevorzugt als Material für die zweite Kapselschicht ist wiederum Siliciumnitrid.

Die Suspensionen für die Aufbringung der zweiten Kapselschicht weisen einen Feststoffanteil von 30 bis 70 Gew.-%, bevorzugt von 50 Gew.-% auf, wobei der Rest der Suspensionen aus Lösungsmittel besteht. Als Lösungsmittel kommen wiederum alle diejenigen in Frage, die aufgrund ihres hohen Dampfdruckes leicht flüchtig sind. Bevorzugt werden zu diesem Zweck wiederum organische Lösungsmittel, beispielsweise Isopropanol, verwendet.

Der Feststoffanteil der Suspensionen für die Aufbringung einer zweiten Kapselschicht weist einen Anteil des arteigenen sinterfähigen Materials von 50 bis 99 Gew.-% und einen Anteil an Sinteradditiven von 1 bis 50 Gew.-%.

Art und Anteil der Sinteradditive an der Zusammensetzung des Feststoffanteils der Pulversuspensionen sind abhängig von der Art des für die zweite Kapselschicht verwendeten Materials. So werden bei Verwendung von Siliciumnitrid beispielsweise 5 bis 15 Gew.-% MgO und 2 bis 10 Gew.-% $Al_2O_3$ oder 5 bis 15 Gew.-% $Y_2O_3$ und 2 bis 10 Gew.-% $Al_2O_3$ oder 5 bis 15 Gew.-% CeO und 2 bis 10 Gew.-% $Al_2O_3$ zugesetzt, wobei sich die Prozentangaben auf die Menge der jeweiligen Verbindung im Feststoffanteil der Suspension beziehen. Der Feststoffanteil von Siliciumcarbid-Suspensionen enthält 1 bis 5 Gew.-% C und 1 bis 5 Gew.-% B oder Aluminium oder Beryllium bzw. ihre Verbindungen, Bornitrid-Suspensionen enthalten im Feststoffanteil 10 bis 20 Gew.-% $B_2O_3$ mit 2 bis 7 Gew.-% Al oder 2 bis 7 Gew.-% AlN oder 1 bis 3 Gew.-% Ca, und Borcarbid-Suspensionen enthalten in ihrem Feststoffanteil 10 bis 50 Gew.-% Al oder Ti oder Si.

Die Suspensionen für die zweite Kapselschicht werden völlig analog wie die der ersten Kapselschicht auf den Formkörper aufgebracht ; entsprechend erfolgt auch im Anschluß daran die Trocknung der zweiten Schicht.

In Abhängigkeit von der Gesamtporosität des zu verdichtenden Formkörpers und von der Porengröße des ihn bildenden Materials wird gegebenenfalls der Vorgang des Eintauchens in die zweite, ein oder mehrere Sinterhilfsmittel enthaltende Suspension sowie die anschließende Verdampfung des Lösungsmittels ein oder mehrmals wiederholt. Dabei kann bei geringer Porengröße des Formkörpers eine Wiederholung unterbleiben, so daß eine zweite Kapselschicht nur einmal aufgebracht wird, während mit steigender Porengröße mehrere Schichten des Sinterhilfsmittel enthaltenden Materials aufgebracht werden. Aufgrund des Materialverbrauchs und des jeweils wieder notwendigen Trockenschrittes werden jedoch nur möglichst wenige Schichten mit Sinterhilfsmitteln, bevorzugt nur eine, aufgebracht.

In einer weiteren bevorzugten Ausführungsform der Erfindung wird der Verfahrensschritt der Trocknung der zweiten Kapselschicht unmittelbar in dem Druckofen durchgeführt, in dem der nachfolgende Sinterschritt und die heißisostatische Pressung erfolgen. Dabei kann dann auch zur Trocknung geringfügiges Vakuum (1,33 Pa) angelegt werden.

Die so erhaltenen Formkörper werden im nachfolgenden Verfahrensschritt bei erhöhter Temperatur in einer Schutzgas-Atmosphäre gesintert. Als Schutzgase kommen nahezu ausschließlich Stickstoff oder Argon in Frage.

Die Sintertemperaturen hängen vom Material der zweiten Kapselschicht ab. Sie betragen im Falle von Siliciumnitrid 1700 bis 2000 °C, im Falle von Siliciumcarbid 1900 bis 2200 °C, im Falle von Bornitrid 1750 bis 2100 °C und Falle von Borcarbid 2000 bis 2300 °C.

Die Zeit, während der die mit den Kapselschichten überzogenen Formkörper bei den angegebenen Temperaturen gehalten werden müssen, sind im allgemeinen relativ kurz ; sie liegen bei ca. 10 Minuten. Bei den angegebenen Verfahrensbedingungen sintert die äußerste, ein oder mehrere Sinterhilfsmittel enthaltende Kapselschicht dicht. Die erste, kein Sinterhilfsmittel enthaltende Kapselschicht verhindert dabei Reaktionen zwischen dem Bauteil und der gasdichten, im folgenden Verfahrensschritt druckübertragenden zweiten Kapselschicht. Um Energie für die Aufheizung des Ofens und auch Zeit zu sparen, wird der Verfahrensschritt des Dichtsinterns der zweiten Kapselschicht bevorzugt in dem Druckofen durchgeführt, in dem nachfolgend der mit zwei Kapselschichten überzogene Formkörper heißisostatisch verdichtet wird. In diesem Fall wird zu Beginn des Verfahrensschrittes des heißisostatischen Verdichtens nur der Gasdruck erhöht und die Temperatur auf den Wert eingestellt, bei dem heißisostatisch gepreßt werden soll.

Die Temperaturen und Drücke für den Vorgang des heißisostatischen Verdichtens sind ebenfalls vom Material des Formkörpers bzw. der Kapselschichten abhängig. So wird Siliciumnitrid bei einem Druck von 30 bis 300 MPa und einer Temperatur von 1600 bis 2000 °C, Siliciumcarbid bei 30 bis 300 MPa und einer Temperatur von 1800 bis 2200 °C, Bornitrid bei 10 bis 300 MPa und einer Temperatur von 1700 bis 2100 °C und Borcarbid bei 10 bis 300 MPa und 1900 bis 2300 °C heißisostatisch verdichtet.

Als druckübertragendes Gas für den Verdichtungsvorgang wird Argon bevorzugt.

Im letzten Schritt des erfindungsgemäßen Verfahrens werden die beiden Kapselschichten mechanisch entfernt. Dies geschieht z. T. schon dadurch, daß Teile der Kapsel beim Auskühlen des verdichteten Formkörpers abspringen. Die verbleibenden Kapsel-Fragmente werden anschließend mit Hilfe eines Sandstrahlgebläses entfernt.

Mit Hilfe des erfindungsgemäßen Verfahrens werden verdichtete Formteile mit ausgezeichneten Eigenschaften und exakt vorbestimmten Maßen erhalten. Vorteil des erfindungsgemäßen Verfahrens ist es insbesondere, daß es sich auf einfach gebaute, aber auch komplizierte Bauteile unterschiedlicher Dimensionen gleich gut anwenden läßt. Beschränkungen hinsichtlich der Dimensionen des Bauteils oder der Kompliziertheit seiner Form werden durch das Verfahren nicht auferlegt.

Die Erfindung wird durch die nachstehenden Beispiele näher erläutert.

Beispiel 1

Als zu verdichtendes Ausgangsmaterial dienten Turbinenschaufeln aus porösem reaktionsgesintertem Siliciumnitrid, die 4 bis 0 Gew.-% Verdichtungshilfsmittel (Sinterhilfsmittel) enthielten, die Gesamtporosität betrug ca. 20 %. (Sinterhilfsmittel : Yttriumoxid).

Zur Aufbringung der ersten Schicht wurden diese Teile in eine Suspension getaucht, die aus 50 Gewichts-% Siliciumnitridpulver und 50 Gewichts-% Isopropylalkohol bestand. Das Siliciumnitridpulver dieser Suspension enthielt keine Sinterhilfsmittel. Durch den Saugeffekt des porösen Formkörpers bildete sich auf der Oberfläche eine Siliciumnitrid-Pulverschicht von etwa 1 mm Stärke. Durch Trocknen in einem Trockenschrank bei 110 °C wurde der Alkohol entfernt.

Nun wurde dieser mit der ersten Schicht überzogene Formkörper in eine zweite Suspension getaucht, deren Feststoffanteil aus 80 Gew.-% Siliciumnitrid, 15 Gew.-% Yttriumoxid und 5 Gew.-% Aluminiumoxid bestand. Durch den Saugeffekt des porösen Formkörpers bildete sich auf der ersten Schicht, bestehend aus reinem Siliciumnitridpulver, nun eine zweite Schicht, die Verdichtungshilfsmittel enthielt. Der Alkohol wurde wieder durch Trocknen bei 110 °C im Trockenschrank entfernt.

Um eine gasundurchlässige Außenschicht herzustellen, wurden diese Teile nun bei 1820 °C 10 Minuten in Stickstoffatmosphäre gesintert. Anschließend wurden diese Teile bei 1750 °C bei 2000 bar Druck in Argonatmosphäre heißisostatisch gepreßt. Die gasdichte Hülle wurde anschließend durch Sandstrahlen wieder entfernt.

Beispiel 2

Als zu verdichtendes Ausgangsmaterial dienten Turbinenschaufeln aus porösem reaktionsgesintertem Siliciumnitrid, die 4 bis 0 Gew.-% Magnesiumoxid als Verdichtungshilfsmittel enthielten. Die Gesamtporosität betrug ca. 20 %.

Zur Aufbringung der ersten Schicht aus Siliciumnitridpulver ohne Verdichtungshilfsmittel wurde verfahren wie in Beispiel 1.

Dieser Formkörper wurde nun in eine zweite Suspension getaucht, deren Feststoffanteil aus 85 Gew.-% Siliciumnitrid, 12 Gew.-% Magnesiumoxid und 3 Gew.-% Aluminiumoxid bestand. Die Trocknung entsprach der in Beispiel 1.

Um eine gasundurchlässige Außenschicht herzustellen, wurden diese Teile nun bei 1800 °C 20 Minuten in Stickstoffatmosphäre gesintert. Das heißisostatische Verdichten erfolgte entsprechend Beispiel 1, ebenso das Entfernen der gasdichten Hülle nach dem Verdichten.

Beispiel 3

Als zu verdichtendes Ausgangsmaterial dienten Turbolader-Rotoren, die aus Siliciumnitridpulver spritzgegossen wurden und 4 bis 0 Gew.-% Yttriumoxid als Verdichtungshilfsmittel enthielten. Die Gesamtporosität lag hier bei ca. 40 %. Zur Aufbringung der ersten Schicht wurde wie in Beispiel 1 verfahren.

Der Formkörper mit dieser ersten Schicht wurde nun in eine zweite Suspension getaucht, deren Feststoffanteil aus 80 Gew.-% Siliciumnitrid, 15 Gew.-% Yttriumoxid und 5 Gew.-% Aluminiumoxid bestand. Wegen des größeren Porenanteils und der dadurch bedingten größeren Porengröße des zu verdichtenden Ausgangsmaterials war es notwendig, das eben erwähnte Tauchverfahren dreimal zu wiederholen. Zwischen jedem Tauchverfahren mußte intensiv getrocknet werden, da diese aufgebrachten Schichten sonst beim Trocknen gerissen wären.

Um eine gasundurchlässige Außenschicht herzustellen wurden diese Teile nun wie in Beispiel 1 bei 1820 °C 10 Minuten in Stickstoffatmosphäre gesintert. Das anschließende heißisostatische Verdichten und das Sandstrahlen der Hülle erfolgte wie in den vorgenannten Beispielen.

Beispiel 4

Als zu verdichtendes Ausgangsmaterial dienten Turbolader-Rotoren, die durch Spritzgießen von Siliciumnitridpulver hergestellt wurden und 4 bis 0 Gew.-% Magnesiumoxid als Verdichtungshilfsmittel enthielten. Die Gesamtporosität lag bei ca. 40 %.

Zur Aufbringung der ersten Schicht wurde wie in Beispiel 1 verfahren.

Diese Formkörper wurden nun in eine zweite Suspension getaucht, deren Feststoffanteil wie in Beispiel 2 aus 85 Gew.-% Siliciumnitrid, 12 Gew.-% Magnesiumoxid und 3 Gew.-% Aluminiumoxid bestand. Auch dieser Tauchvorgang wurde dreimal wiederholt, unterbrochen durch jeweiliges Trocknen.

Das Aufsintern dieser Außenschicht erfolgte wie in Beispiel 2 bei 1800 °C, das anschließende heißisostatische Verdichten und das Sandstrahlen der Hülle erfolgen wie in den vorgenannten Beispielen.

Beispiel 5

Als zu verdichtendes Ausgangsmaterial dienten Turbinenschaufeln aus spritzgegossenem Siliciumcarbidpulver, die 2 Gew.-% Kohlenstoff und 2 Gew.-% Bor enthielten. Die Gesamtporosität lag bei ca. 40 %. Zur Aufbringung der ersten Schicht wurden diese Teile in eine Suspension getaucht, die aus 50 Gew.-% Siliciumcarbidpulver und 50 Gew.-% Isopropylalkohol bestand. Das Siliciumcarbidpulver dieser ersten Suspension enthielt keine Verdichtungshilfsmittel. Durch den Saugeffekt des porösen Formkörpers bildete sich auf der Oberfläche eine Siliciumcarbidpulverschicht von etwa 1 mm Stärke. Durch Trocknen in einem Trockenschrank bei 110 °C wurde der Alkohol entfernt.

Nun wurde dieser mit der ersten Schicht überzogene Formkörper in eine zweite Suspension getaucht, deren Feststoffanteil aus 94 Gew.-% Siliciumcarbid, 3 Gew.-% Bor und 3 Gew.-% Kohlenstoff bestand. Dieser Tauchvorgang wurde wie in Beispiel 4 dreimal wiederholt, um eine genügend dicke Schicht zu erhalten. Der Grund für dieses dreimalige Tauchen war die hohe Porosität des Grünlings und die damit verbundenen großen Poren.

Um eine gasundurchlässige Außenschicht herzustellen, wurden diese Teile nun bei 2100 °C 30 Minuten gesintert. Anschließend wurden diese Teile bei 2 050 °C und 2000 bar Druck in Argonatmosphäre heißisostatisch gepreßt.

Die gasdichte Hülle wurde anschließend durch Sandstrahlen wieder entfernt.

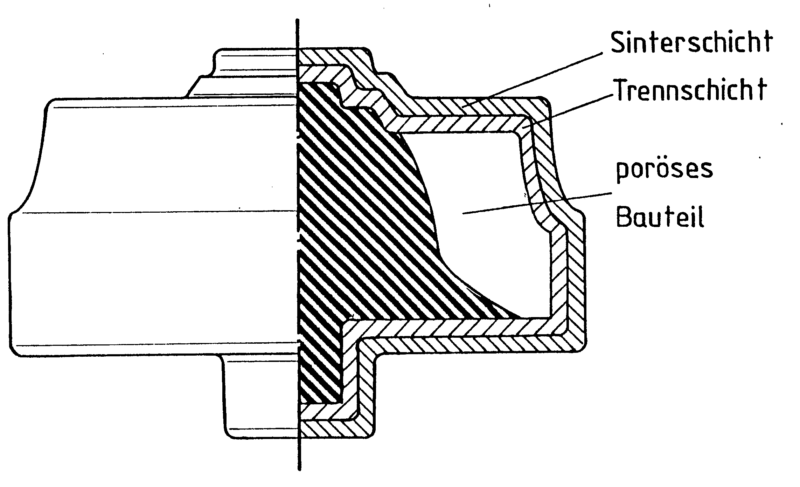

Eine schematische Darstellungsform des Anmeldungsgegenstandes ist in der beiliegenden Zeichnung dargestellt.

## Patentansprüche

1. Verfahren zum Verdichten kompliziert geformter und poröser keramischer Bauteile beliebiger Größe durch Kapseln mit arteigenen sinterfähigen Schichten und anschließendes heißisostatisches Pressen, dadurch gekennzeichnet, daß man

a) die vorgeförmten porösen keramischen Körper in eine Suspension eines arteigenen, kein Sinterhilfsmittel enthaltenden Materials in einem Lösungsmittel taucht und eine erste Kapselschicht bildet,

b) das Lösungsmittel anschließend verdampft,

c) die so erhaltenen Körper in eine zweite Suspension eines arteigenen sinterfähigen, ein oder mehrere Sinterhilfsmittel enthaltenden Materials in einem Lösungsmittel taucht und eine zweite Kapselschicht bildet,

d) das Lösungsmittel anschließend verdampft,

e) die so erhaltenen Körper bei erhöhter Temperatur in einer Schutzgas-Atmosphäre während einer ausreichenden Zeit sintert,

f) die mit einer dichtgesinterten Oberfläche versehenen Körper nach an sich bekannten Verfahren heißisostatisch verdichtet und

g) die beiden Kapselschichten mechanisch entfernt.

2. Verfahren nach Anspruch 1, dadurch gekennzeichnet, daß man als vorgeformte poröse keramische Körper solche aus nicht-oxidischen keramischen Werkstoffen, bevorzugt Siliciumnitrid, Siliciumcarbid, Bornitrid oder Borcarbid verwendet.

3. Verfahren nach Ansprüchen 1 und 2, dadurch gekennzeichnet, daß man zur Ausbildung einer ersten Kapselschicht Suspensionen verwendet, die aus 30 bis 70 Gew.-% eines kein Sinterhilfsmittel enthaltenden Pulvers und 70 bis 30 Gew.-% eines Lösungsmittels bestehen.

4. Verfahren nach Anspruch 3, dadurch gekennzeichnet, daß man als Feststoff für die Bildung der ersten Kapselschicht das gleiche Material in Pulverform verwendet, aus dem auch das zu verdichtende Bauteil besteht.

5. Verfahren nach Ansprüchen 3 und 4, dadurch gekennzeichnet, daß man bevorzugt Siliciumnitrid, Siliciumcarbid, Bornitrid oder Borcarbid verwendet.

6. Verfahren nach Ansprüchen 1 bis 5, dadurch gekennzeichnet, daß man die noch feuchte erste Kapselschicht mit einem pulverförmigen sinterfähigen Material überzieht, dessen Korngröße diejenige der ersten Kapselschicht übersteigt.

7. Verfahren nach Anspruch 6, dadurch gekennzeichnet, daß man für die erste Kapselschicht und die trocken aufgebrachte Schicht Materialien verwendet, die gleich sind, sich aber hinsichtlich ihrer Korngrößen unterscheiden.

8. Verfahren nach Ansprüchen 1 bis 7, dadurch gekennzeichnet, daß man für die Ausbildung einer zweiten Kapselschicht Suspensionen verwendet, die einen Feststoffanteil von 30 bis 70 Gew.-%, der sich zu 50 bis 99 % aus einem sinterfähigen pulverförmigen Material und zu 1 bis 50 % aus einem oder mehreren Sinterhilfsmitteln zusammensetzt, und einen Lösungsmittelanteil von 70 bis 30 Gew.-% aufweisen.

9. Verfahren nach Anspruch 8, dadurch gekennzeichnet, daß man das Verhältnis Feststoffanteil zu Lösungsmittelanteil in der zweiten Suspension auf ein Gewichtsverhältnis von 1 : 1 einstellt.

10. Verfahren nach Anspruch 8, dadurch gekennzeichnet, daß man als sinterfähiges Material für die zweite Kapselschicht das gleiche Material verwendet, aus dem auch der Formkörper und die erste Kapselschicht bestehen.

11. Verfahren nach Ansprüchen 3 und 8, dadurch gekennzeichnet, daß man für die Suspensionen ein leicht flüchtiges, bevorzugt organisches Lösungsmittel verwendet.

12. Verfahren nach Anspruch 11, dadurch gekennzeichnet, daß man als Lösungsmittel Isopropanol verwendet.

13. Verfahren nach Ansprüchen 1 bis 12, dadurch gekennzeichnet, daß man die Verfahrensschritte des Aufbringens einer zweiten, ein oder mehrere Sinterhilfsmittel enthaltenden Kapselschicht und des anschließenden Trocknen gegebenenfalls mehrfach wiederholt.

14. Verfahren nach Ansprüchen 1 bis 13, dadurch gekennzeichnet, daß man als Schutzgas für den Sinter-Vorgang Stickstoff verwendet.

15. Verfahren nach Ansprüchen 1 bis 14, dadurch gekennzeichnet, daß man den Sintervorgang während einer Zeitdauer von 10 min bei Temperaturen von 1700 bis 2000 °C im Falle von Siliciumnitrid, von 1900 bis 2200 °C im Falle von Siliciumcarbid, von 1750 bis 2100 °C im Falle von Bornitrid und von 2000 bis 2300 °C im Falle von Borcarbid durchführt.

## Claims

1. A process for compacting a porous ceramic structural member having a complicated shape and an optional size by encapsulation with a layer consisting of the same type of material and capable of sintering and subsequent hot-isostatic pressing, characterized by the steps of

a) immersing the preformed porous ceramic body in a suspension of a material of the same type which contains no sintering aid in a solvent, thereby forming a first encapsulating layer ;

b) subsequently evaporating the solvent ;

c) immersing the thus obtained body in a second suspension of a material of the same type capable of sintering in a solvent which contains one or more than one sintering aids, thereby forming a second encapsulating layer ;

d) subsequently evaporating the solvent ;

e) sintering the thus obtained body at an elevated temperature in an atmosphere of a protective gas for a sufficient period of time ;

f) isostatically compacting the body provided with a tight-sintered surface by means of a per se known process and

g) mechanically removing the two encapsulating layers.

2. The process according to claim 1, characterized in that a preform made of a nonoxidic ceramic material, preferably silicon nitride, silicon carbide, boron nitride or boron carbide, is employed as the preformed porous ceramic body.

3. The process according to claims 1 and 2, characterized in that a suspension consisting of from 30 to 70 % by weight of powder containing no sintering aid and from 70 to 30 % by weight of a solvent is employed for the formation of the first encapsulating layer.

4. The process according to claim 3, characterized in that the same material which the structural member to be compacted consists of is employed in the form of a powder as the solid material for the formation of the first encapsulating layer.

5. The process according to claims 3 and 4, characterized in that silicon nitride, silicon carbide, boron nitride or boron carbide are preferably used.

6. The process according to claims 1 to 5, characterized in that the first encapsulating layer while still wet is coated with a powdery material capable of sintering the particle size of which is in excess of that of the first encapsulating layer.

7. The process according to claim 6, characterized in that materials are employed for the first encapsulating layer and the applied dry layer which are equal in nature but different in their particle sizes.

8. The process according to claims 1 to 7, characterized in that a suspension consisting of from 30 to 70 % by weight of a solid proportion composed of from 50 to 99 % of powdery material capable of sintering and from 1 to 50 % of one or more than one sintering aids and from 70 to 30 % by weight of a solvent proportion is employed for the formation of the second encapsulating layer.

9. The process according to claim 8, characterized in that the ratio of the solid proportion to the solvent proportion in the second suspension is adjusted to a ratio by weight of 1 :1.

10. The process according to claim 8, characterized in that the same material which the preform and the first encapsulating layer consist of is employed as the solid material capable of sintering for the formation of the second encapsulating layer.

11. The process according to claims 3 and 8, characterized in that a readily volatile, and preferably organic, solvent is used for the suspensions.

12. The process according to claim 11, characterized in that isopropanol is used as the solvent.

13. The process according to claims 1 to 12, characterized in that the process steps of applying a second encapsulating layer containing one or more than one sintering aids and subsequent drying are repeated, optionally several times.

14. The process according to claims 1 to 13, characterized in that nitrogen is used as the protective gas for the sintering procedure.

15. The process according to claims 1 to 14, characterized in that the sintering procedure is carried out for a period of 10 minutes at a temperature from 1700 °C to 2000 °C in the case of silicon nitride, at a temperature from 1900 °C to 2200 °C in the case of silicon carbide, at a temperature from 1750 °C to 2100 °C in the case of boron nitride and at a temperature from 2000 °C to 2300 °C in the case of boron carbide.

## Revendications

1. Procédé pour comprimer des pièces céramiques poreuses, de forme compliquée, de taille quelconque, par gainage à l'aide de couches frittables spécifiques, suivi d'une compression isostatique à chaud, caractérisé en ce que

a) on immerge les pièces céramiques poreuses préformées dans une suspension d'un matériau spécifique, ne contenant pas d'auxiliaire de frittage, dans un solvant, et on forme une première couche de gainage,

b) puis on évapore le solvant,

c) on immerge les pièces ainsi obtenues dans une seconde suspension d'un matériau frittable spécifique contenant un ou plusieurs auxiliaires de frittage, dans un solvant, et on forme une deuxième couche de gainage,

d) puis on évapore le solvant,

e) on fritte les pièces ainsi obtenues à haute température sous une atmosphère d'un gaz protecteur, pendant un temps suffisant,

f) on comprime par compression isostatique à chaud, par des procédés connus en soi, les pièces pourvues d'une surface frittée étanche, et

g) on élimine par un moyen mécanique les deux couches de gainage.

2. Procédé selon la revendication 1, caractérisé en ce qu'on utilise comme pièces céramiques poreuses préformées des pièces en des matériaux céramiques autres que des oxydes, de préférence du nitrure de silicium, du carbure de silicium, du nitrure de bore ou du carbure de bore.

3. Procédé selon les revendications 1 et 2, caractérisé en ce que, pour former une première couche de gainage, on utilise des suspensions constituées de 30 à 70 % en poids d'une poudre ne contenant pas d'auxiliaire de frittage et de 70 à 30 % en poids d'un solvant.

4. Procédé selon la revendication 3, caractérisé en ce qu'on utilise comme matière solide pour la formation de la première couche de gainage le même matériau, sous forme pulvérulente, que celui dont est aussi constituée la pièce à comprimer.

5. Procédé selon les revendications 3 et 4, caractérisé en ce qu'on utilise de préférence du nitrure de silicium, du carbure de silicium, du nitrure de bore ou du carbure de bore.

6. Procédé selon les revendications 1 à 5, caractérisé en ce qu'on revêt la première couche de gainage, encore humide, d'un matériau frittable pulvérulent, dont la granulométrie est supérieure à celle de la première couche de gainage.

7. Procédé selon la revendication 6, caractérisé en ce qu'on utilise pour la première couche de gainage et la couche appliquée à sec des matériaux identiques, mais qui se distinguent par leur granulométrie.

8. Procédé selon les revendications 1 à 7, caractérisé en ce qu'on utilise pour la constitution d'une deuxième couche de gainage des suspensions ayant un extrait sec de 30 à 70 % en poids, lequel se compose de 50 à 99 % en poids d'un matériau pulvérulent frittable et de 1 à 50 % d'un ou plusieurs auxiliaires de frittage, et, avec 70 à 30 % en poids d'un solvant.

9. Procédé selon la revendication 8, caractérisé en ce qu'on ajuste le rapport entre l'extrait sec et la quantité de solvant dans la deuxième suspension à un rapport pondéral de 1 :1.

10. Procédé selon la revendication 8, caractérisé en ce qu'on utilise comme matériau frittable pour la deuxième couche de gainage le même matériau que celui dont sont aussi constituées la pièce et la première couche de gainage.

11. Procédé selon les revendications 3 et 8, caractérisé en ce qu'on utilise pour les suspensions un solvant facilement volatil, de préférence organique.

12. Procédé selon la revendication 11, caractérisé en ce qu'on utilise comme solvant l'isopropanol.

13. Procédé selon les revendications 1 à 12, caractérisé en ce qu'on répète éventuellement plusieurs fois les étapes consistant à appliquer une deuxième couche de gainage contenant un ou plusieurs auxiliaires de frittage, et à effectuer un séchage ultérieur.

14. Procédé selon les revendications 1 à 13, caractérisé en ce qu'on utilise de l'azote comme gaz protecteur lors de l'opération de frittage.

15. Procédé selon les revendications 1 à 14, caractérisé en ce qu'on met en œuvre l'opération de frittage pendant 10 minutes à des températures de 1700 à 2000 °C dans le cas du nitrure de silicium, de 1900 à 2200 °C dans le cas du carbure de silicium, de 1750 à 2100 °C dans le cas du nitrure de bore, et de 2000 à 2300 °C dans le cas du carbure de bore.

Sinterschicht
Trennschicht
poröses Bauteil